# EUROPÄISCHE PATENTSCHRIFT

(11) **EP 2 617 483 B1**
(45) Veröffentlichungstag und Bekanntmachung des Hinweises auf die Patenterteilung: **15.07.2015**
(21) Anmeldenummer: 12152170.2
(22) Anmeldetag: 23.01.2012
(51) Int. Cl.: B01F 7/16, B01F 15/00

(54) **Verfahren zum Betreiben eines Rührwerks sowie Verwendung einer Vorrichtung zur Durchführung des Verfahrens**
Method for operating a stirrer and use of a device for carrying out the method
Procédé de fonctionnement d'un agitateur ainsi que utilisation d'un dispositif destiné à la réalisation du procédé

(43) Veröffentlichungstag der Anmeldung: 24.07.2013
(73) Patentinhaber: Siemens Aktiengesellschaft, 80333 München (DE)
(72) Erfinder: Müller, Peter, 76187 Karlsruhe (DE); Pfeiffer, Bernd-Markus, 76744 Wörth (DE)

(56) Entgegenhaltungen:
- EP-A2- 0 189 141
- CH-A5- 683 322
- DE-A1- 2 150 531
- DE-A1- 19 506 006
- DE-B3-102004 040 774
- DE-U1-202005 015 341
- US-A- 4 120 051
- US-A- 5 921 679
- Wikipedia: "Drehstrom-Asynchronmaschine", , 11. Juni 2010 (2010-06-11), XP002679226, Gefunden im Internet: URL:http://web.archive.org/web/20100615025 044/http://de.wikipedia.org/wiki/Drehstrom -Asynchronmaschine [gefunden am 2012-07-04]
- "4.3.1 Drehstrom-Asynchronmotoren" In: Linse H.: "Elektrotechnik für Maschinenbauer", 1987, B. G. Teubner, Stuttgart, XP002679227, ISBN: 3-519-06325-5 * Seite 241 - Seite 257 *

## Beschreibung

Die Erfindung betrifft ein Verfahren zum Betreiben eines Rührwerks sowie Verschiedene Verwendungen zur Durchführung des Verfahrens

In verfahrenstechnischen Anlagen finden häufig Behälter Verwendung, in denen ein Rührwerk zur Durchmischung eines aus verschiedenen Stoffen zusammengesetzten Mediums oder zur Bewegung des Mediums eingesetzt wird. Beispielsweise in Reaktionsbehältern werden verschiedene flüssige, gasförmige oder pulverförmige Stoffe zusammengebracht und mit einem geeigneten Rührwerk durchmischt. Dabei kann es sich um einen Behälter handeln, in welchem ein kontinuierlicher Prozess, also ein Prozess mit einem kontinuierlichen Zustrom von Rohstoffen und einem kontinuierlichen Abfluss von Produkten, oder ein so genannter Batch-Prozess abläuft, der durch eine diskontinuierliche Produktion von Chargen gekennzeichnet ist.

In Rührwerken werden häufig Rührer durch drehzahlgeregelte Elektromotoren angetrieben, um durch Veränderung der Drehzahl Medien mit unterschiedlichem Fließverhalten durchmischen zu können. Dabei wird die Drehzahl des Rührers empirisch so eingestellt, dass eine gute Durchmischung erhalten wird und möglichst wenig Gasblasen entstehen. Die Einstellung wird also üblicherweise aufgrund von Erfahrungswerten ohne Berücksichtigung des damit verbundenen Energieverbrauchs vorgenommen.

Aus der US 5,921,679 A ist bereits ein Verfahren zum Betreiben eines Rührwerks für einen mit einem Medium befüllten Behälter bekannt, bei welchem durch eine Steuereinrichtung verschiedene, in Abhängigkeit des jeweils zu durchmischenden Mediums vorbestimmte und in einem Speicher hinterlegte Werte der Drehzahl des Rührwerks in vorgegebener zeitlicher Abfolge und Dauer eingestellt werden.

Der Erfindung liegt die Aufgabe zugrunde, ein Rührwerk für einen mit einem Medium befüllten Behälter in einer Fahrweise mit geringerem Energieverbrauch zu betreiben.

Zur Lösung dieser Aufgabe weist das neue Verfahren zum Betreiben eines Rührwerks die in Anspruch 1 angegebenen Merkmale auf. In Anspruch 3 ist eine entsprechende Verwendung eines Computerprogramms, in Anspruch 4 eine entsprechende Verwendung eines Speichermediums und in Anspruch 5 eine Verwendung einer Vorrichtung zur Durchführung des Verfahrens beschrieben. In Anspruch 2 ist eine vorteilhafte Weiterbildung der Erfindung angegeben.

In vorteilhafter Weise wird durch die Erfindung aufgrund der Einstellung der Drehzahl des Rührwerks auf einen in einem Speicher hinterlegten Wert, der für einen Rührwerksbetrieb mit geringem Energieverbrauch vorbestimmt ist, eine besonders energieeffiziente Fahrweise des Rührwerks erreicht. Als weiterer Vorteil hat sich in praktischen Versuchen gezeigt, dass bei dieser Drehzahl nahezu keine Blasenbildung auftritt und somit ungewollte Schaumbildung vermieden wird. Die Erfahrung zeigt, dass Blasenbildung und turbulente Strömungen beispielsweise an den Flügeln eines Rührers die Durchmischung des in einem Reaktorbehälter befindlichen Mediums nicht verbessern, den Energieverbrauch des Rührwerks jedoch stark erhöhen. Daher wird in vielen Fällen bei energieoptimaler Fahrweise und laminarer Strömung gleichzeitig eine optimale Durchmischung des Mediums erreicht.

In einer automatisierungstechnischen Anlage kann die Ansteuer- und Auswerteeinrichtung, in deren Speicher der Drehzahlwert hinterlegt ist, beispielsweise durch eine spezielle Steuereinrichtung für das Rührwerk oder eine gesonderte speicherprogrammierbare Steuerung realisiert sein, die neben der Aufgabe der Rührwerkssteuerung noch weitere Funktionen der Anlagensteuerung übernimmt. Alternativ kann es sich dabei aber auch um eine Leitstation der automatisierungstechnischen Anlage handeln. In einem Speicher der Ansteuer- und Auswerteeinrichtung kann bei wechselnder Behälterbefüllung eine Vielzahl vorbestimmter Werte der Drehzahl für einen Rührwerksbetrieb mit geringem Energieverbrauch hinterlegt sein, die den verschiedenen Medien zugeordnet sind. Das jeweils zu durchmischende Medium wird beispielsweise anhand des Rezepts für den gerade in einem Reaktionsbehälter ablaufenden Prozess automatisch oder manuell durch Bedieneingabe bestimmt. In Abhängigkeit des jeweils zu durchmischenden Mediums stellt schließlich die Ansteuer- und Auswerteeinrichtung die für einen Rührwerksbetrieb mit geringem Energieverbrauch vorbestimmte und aus dem Speicher ausgelesene Drehzahl für den bezüglich des Energieverbrauchs optimierten Betrieb des Rührwerks ein. Prinzipiell ist es möglich, die jeweilige Drehzahl für einen Rührwerksbetrieb mit geringem Energieverbrauch für verschiedene Medien anhand ihrer bekannten, das jeweilige Fließverhalten beschreibenden Parameter zu ermitteln. Erfindungsgemäß wird jedoch eine exemplarspezifisch an den jeweiligen Befüllungsgrad und die Medieneigenschaften, wie zum Beispiel Fließverhalten oder Massendichte, angepasste Einstellung der Drehzahl für einen Rührwerksbetrieb mit geringem Energieverbrauch erreicht, wenn diese in einer Anlaufphase durch eine Messreihe vorbestimmt wird. Dazu werden bei mit dem Medium befülltem Behälter mehrere verschiedene Drehzahlwerte des Rührwerks eingestellt und zugehörige Kennwerte des Energieverbrauchs bestimmt und ausgewertet.

Der Wert der Drehzahl für einen Rührwerksbetrieb mit geringem Energieverbrauch ist anhand einer Kennlinie, die Kennwerte des Energieverbrauchs in Abhängigkeit der Drehzahl darstellt, vorbestimmt. Die Kennlinie kann für verschiedene Medien im Speicher hinterlegt sein, so dass in Abhängigkeit des jeweiligen Rezepts die dafür geeignete Kennlinie zur Auswertung herangezogen wird.

Alternativ wird die Kennlinie in einer Anlaufphase vor dem eigentlichen Rührvorgang aufgenommen. Dazu werden Werte des Energieverbrauchs über eine bestimmte Zeit für verschiedene Drehzahlen als Messreihe erfasst und abgespeichert. Über die einzelnen Messreihen wird eine Mittelwertbildung durchgeführt. Die berechneten Mittelwerte, die den verschiedenen Drehzahlwerten zugeordnet sind, werden anschließend als Kennlinie dargestellt. Der durch die Ansteuer- und Auswerteeinrichtung im eigentlichen Rührvorgang eingestellte Wert der Drehzahl muss nicht zwingend der Drehzahl mit minimalem Energieverbrauch entsprechen. Wenn beispielsweise bei leicht höherer Drehzahl der Energieverbrauch nur sehr geringfügig steigt, sich jedoch das Ergebnis der Durchmischung verbessert, kann die Einstellung einer etwas höheren Drehzahl vorteilhaft sein, die immer noch einen Rührwerksbetrieb mit geringem Energieverbrauch gewährleistet.

In besonders vorteilhafter Weise ist das Verfahren bei Rührwerken anwendbar, in welchen ein Rührer durch einen Drehstrommotor mit vorgeschaltetem Frequenzumrichter angetrieben wird. Derartige Frequenzumrichter liefern meist als bereits vorhandenen Ausgabewert einen Messwert der Stromaufnahme des Motors, der beispielsweise im Prozessleitsystem PCS7 mit einem speziellen Treiberbaustein für den Frequenzumrichter als Strom-Istwert am Ausgang des Treiberbausteins abgelesen werden kann. Unter der meist zutreffenden Annahme, dass die Netzspannung und die Phasenverschiebung cosϕ zwischen Spannung und Strom in erster Näherung konstant sind, ist die aufgenommene elektrische Leistung des als Antrieb dienenden Drehstrommotors proportional zum Strom-Istwert des Frequenzumrichters. Die Vorbestimmung eines Werts der Drehzahl für einen Rührwerksbetrieb mit geringem Energieverbrauch kann damit durch die Ansteuer- und Auswerteeinrichtung unmittelbar anhand des Strom-Istwerts erfolgen und es ist in vorteilhafter Weise kein zusätzlicher Aufwand zur Bestimmung eines Kennwerts des Energieverbrauchs nötig.

Das Verfahren ist bevorzugt in Software oder in einer Kombination Soft-/Hardware implementiert, so dass die Erfindung auch die Verwendung eines Computerprogramms mit durch einen Computer ausführbaren Programmcodeanweisungen zur Implementierung des Verfahrens betrifft. In diesem Zusammenhang betrifft die Erfindung auch die Verwendung eines Computerprogrammprodukts, insbesondere einen Datenträger oder ein Speichermedium, mit einem durch einen Computer ausführbaren derartigen Computerprogramm. Ein solches Computerprogramm ist bevorzugt Bestandteil der Ansteuer- und Auswerteeinrichtung und wird in einem Speicher der Ansteuerund Auswerteeinrichtung vorgehalten oder ist in diesen Speicher ladbar, so dass beim Betrieb der Vorrichtung diese die Einstellung der Drehzahl für einen Rührwerksbetrieb mit geringem Energieverbrauch nach dem Verfahren automatisch ausführt.

Anhand der Zeichnungen, in denen ein Ausführungsbeispiel der Erfindung dargestellt ist, werden im Folgenden die Erfindung sowie Vorteile und Ausgestaltungen näher erläutert.

Es zeigen:
- Figur 1: einen Reaktionsbehälter mit Rührwerk,
- Figur 2: eine exemplarisch aufgenommene Stromkennlinie und
- Figur 3: Motorkennlinien für einen Asynchronmotor.

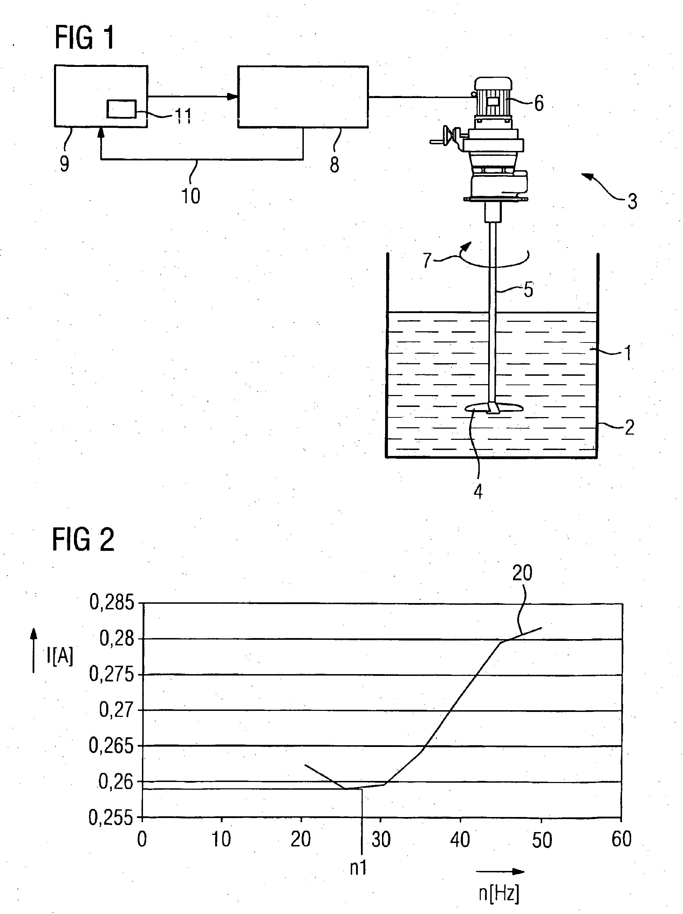

Die Prinzipdarstellung gemäß Figur 1 zeigt einen mit einem Medium 1 befüllten Behälter 2, der mit einem Rührwerk 3 versehen ist. Das Rührwerk 3 umfasst einen Rührer 4, der am Ende einer Welle 5 angeordnet ist, die durch einen Asynchronmotor 6 entsprechend einem Pfeil 7 in eine Drehbewegung versetzt wird. Zum drehzahlgeregelten Betrieb des Asynchronmotors 6 ist diesem ein Frequenzumrichter 8 vorgeschaltet, der seinerseits von einer Ansteuer- und Auswerteeinrichtung 9 einen vorbestimmten und aus einem Speicher 11 ausgelesenen Wert 12 für die Drehzahl der Welle 5 erhält. Durch den Frequenzumrichter 8 wird im Asynchronmotor 6 ein Drehfeld geeigneter Frequenz erzeugt, so dass die gewünschte Drehzahl der Welle 5 zumindest näherungsweise erreicht wird. An die Ansteuer- und Auswerteeinrichtung 9 liefert der Frequenzumrichter 8 einen Strom-Istwert 10 zurück, der abhängig von der jeweils gefahrenen Drehzahl des Rührwerks 3 veränderlich ist und als Kennwert für den Energieverbrauch in der Ansteuer- und Auswerteeinrichtung 9 ausgewertet wird. Dabei wird davon ausgegangen, dass die Netzspannung, mit welcher der Frequenzumrichter 8 betrieben wird, sowie die Phasenverschiebung zwischen Strom und Spannung zumindest näherungsweise konstant sind.

Bei medienbefülltem Behälter 2 wird in einer Anlaufphase vor dem eigentlichen Betrieb des Rührwerks 3 eine Kennlinie aufgenommen, welche die Abhängigkeit des aufgenommenen Stroms von der eingestellten Drehzahl des Rührwerks darstellt. Als Beispiel hierfür ist in Figur 2 eine Kennlinie 20 in ein Diagramm gezeichnet, in welchem auf der Abszisse die Drehzahl n in der Einheit Hertz (Hz) und auf der Ordinate der aufgenommene Strom I in der Einheit Ampere (A) aufgetragen sind. Zur Ermittelung der Kennlinie 20 werden Stromwerte über eine bestimmte Zeit für verschiedene Drehzahlen als Messreihe aufgenommen. Über die einzelnen Messreihen wird eine Mittelwertbildung vorgenommen. Die Mittelwerte der Stromwerte werden anschließend den verschiedenen Drehzahlen zugeordnet und als Kennlinie 20 dargestellt.

Bei praktischen Versuchen an einem Rührwerk in einem Reaktionsbehälter wurden derartige Stromkennlinien für verschiedene Füllstände aufgenommen. Die Ergebnisse zeigten, dass der Strom bei Erhöhung der Drehzahl zunächst sinkt und erst bei größeren Drehzahlen dann wieder ansteigt. Die Form der Stromkennlinie 20 ist daher nicht signifikant abhängig vom Füllstand, solange der Rührer vollständig in das Medium eingetaucht ist. Ein vollständiges Eintauchen des Rührers wird in der praktischen Anwendung von Rührwerken durch eine üblicherweise vorhandene Verriegelungslogik sichergestellt.

Anhand der Kennlinie 20 kann nun eine bezüglich des Energieverbrauchs optimale Drehzahl n1 ermittelt werden. Durch die Ansteuer- und Auswerteeinrichtung wird dann für den eigentlichen Rührwerksbetrieb eine Drehzahl eingestellt, bei welcher ein geringer Energieverbrauch bei gleichzeitig guter Effektivität des Mischvorgangs erreicht wird. Bei dem in Figur 2 veranschaulichten Beispiel liegt ein geeigneter Drehzahlbereich zwischen etwa 25 und 35 Hz.

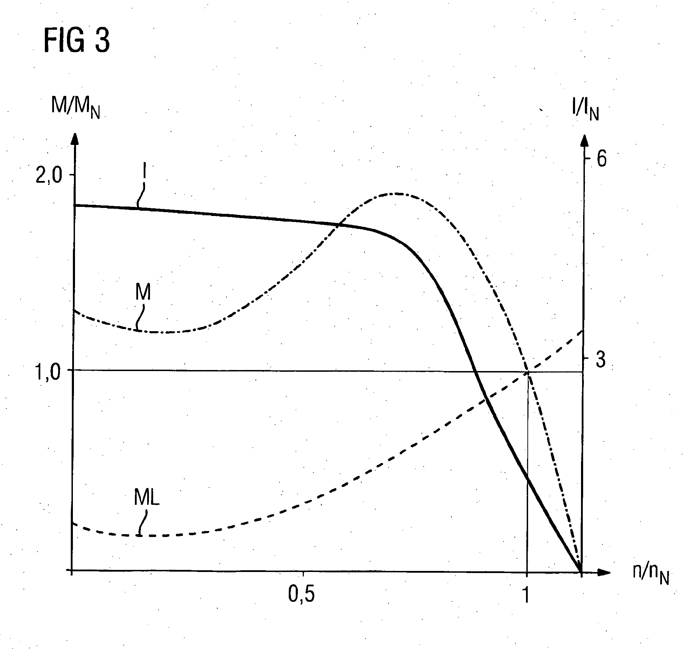

Das in Figur 2 dargestellte Verhalten eines Rührwerks ist bei der Verwendung von Asynchronmotoren als Antrieb in dem Rührwerk kein Einzelfall. Dazu sind in Figur 3 zur weiteren Erläuterung übliche Verläufe von Strom I, Moment M und Lastmoment ML über der Drehzahl n dargestellt. Die Skalierungen ist auf ein Nennmoment M_{N}, einen Nennstrom IN und eine Nenndrehzahl n_{N} normiert. Der Verlauf des Antriebsmoments M weist bei Asynchronmaschinen ein charakteristisches Minimum im Bereich kleiner Drehzahlen auf. Der Motorstrom I ist über weite Bereiche proportional zum Motormoment M, aber nicht im Bereich kleiner Drehzahlen n. Der Verlauf des Lastmoments ML bei Bewegungen gegen den Strömungswiderstand von Flüssigkeiten steigt quadratisch mit der Relativgeschwindigkeit, das heißt mit der Drehzahl n. Wegen der Haftreibung hat das Lastmoment ML bei der Drehzahl n = 0, das heißt bei Stillstand des Rührers, einen höheren Wert als bei niedrigen Drehzahlen n. Die Drehzahlregelung des Antriebs sorgt dafür, dass dem Motor soviel Strom I zugeführt wird, wie er zur Überwindung des Lastmoments ML braucht. Die am realen Rührwerk aufgenommene Stromkennlinie 20, die in Figur 2 dargestellt ist, entsteht daher aus einer Kombination der in Figur 3 dargestellten Verläufe von Antriebsmoment M, Strom I und Lastmoment ML.

An dem beschriebenen Ausführungsbeispiel wird der Vorteil besonders deutlich, dass durch Einstellen eines für einen Rührwerksbetrieb mit geringem Energieverbrauch vorbestimmten Drehzahlwerts eine erhebliche Energieeinsparung erzielbar ist und gleichzeitig weitere Schwierigkeiten wie beispielsweise Blasenbildung vermieden werden können. Zur Bestimmung des Drehzahlwerts kann die Aufnahme einer Stromkennlinie, insbesondere in einer Anlaufphase des Rührwerks vor dem eigentlichen Rührwerksbetrieb, und deren Auswertung von Nutzen sein.

## Patentansprüche

1. Verfahren zum Betreiben eines Rührwerks (3) für einen mit einem Medium (1) befüllten Behälter (2), bei welchem durch eine Ansteuer- und Auswerteeinrichtung (9) ein in Abhängigkeit des jeweils zu durchmischenden Mediums (1) vorbestimmter und in einem Speicher (11) hinterlegter Wert (12) der Drehzahl des Rührwerks (3) eingestellt wird,
**dadurch gekennzeichnet, dass** zur Vorbestimmung der Drehzahl vor dem eigentlichen Rührvorgang durch die Ansteuer- und Auswerteeinrichtung (9) bei mit dem Medium (1) befülltem Behälter (2) mehrere verschiedene Drehzahlwerte des Rührwerks (3) eingestellt und zugehörige Kennwerte (10) des Energieverbrauchs des Rührwerks (3) bestimmt und ausgewertet werden,
dass eine Kennlinie (20), die Kennwerte des Energieverbrauchs in Abhängigkeit der Drehzahl (n) darstellt, ermittelt wird, dass anhand der Kennlinie (20) eine bezüglich des Energieverbrauchs optimale Drehzahl (n1) ermittelt wird und
dass die in Abhängigkeit des jeweils zu durchmischenden Mediums (1) einzustellende Drehzahl des Rührwerks (3) für einen Rührwerksbetrieb mit geringem Energieverbrauch vorbestimmt und durch die Ansteuer- und Auswerteeinrichtung (9) für einen bezüglich des Energieverbrauchs optimierten Betrieb des Rührwerks (3) eingestellt wird.

2. Verfahren nach Anspruch 1, **dadurch gekennzeichnet, dass** ein Rührer (4) des Rührwerks (3) durch einen Drehstrommotor (6) mit vorgeschaltetem Frequenzumrichter (8) angetrieben wird und dass als Kennwert (10) des Energieverbrauchs die Stromaufnahme (10, I) des Motors (6), die der Frequenzumrichter (8) anzeigt, durch die Ansteuer- und Auswerteeinrichtung (9) ausgewertet wird.

3. Verwendung eines Computerprogramms mit durch einen Computer ausführbaren Programmcodeanweisungen zur Implementierung des Verfahrens nach Anspruch 1 oder 2 auf einem Computer.

4. Verwendung eines Speichermediums mit einem durch einen Computer ausführbaren Computerprogramm gemäß Anspruch 3.

5. Verwendung einer Vorrichtung zur Durchführung des Verfahrens nach Anspruch 1 oder 2 mit einem Rührwerk (3) für einen mit einem Medium (1) befüllten Behälter (2) und mit einer Ansteuer- und Auswerteeinrichtung (9) für das Rührwerk (3), die dazu ausgebildet ist, einen in Abhängigkeit des jeweils zu durchmischenden Mediums (1) vorbestimmten und in einem Speicher (11) hinterlegten Wert (12) der Drehzahl des Rührwerks (3) einzustellen,
**dadurch gekennzeichnet,**
- **dass** die Ansteuer- und Auswerteeinrichtung (9) weiterhin dazu ausgebildet ist, zur Vorbestimmung der Drehzahl vor dem eigentlichen Rührvorgang bei mit dem Medium (1) befülltem Behälter (2) mehrere verschiedene Drehzahlwerte des Rührwerks (3) einzustellen und zugehörige Kennwerte (10) des Energieverbrauchs des Rührwerks (3) zu bestimmen und auszuwerten,
- eine Kennlinie (20), die Kennwerte des Energieverbrauchs in Abhängigkeit der Drehzahl (n) darstellt, zu ermitteln,
- anhand der Kennlinie (20) eine bezüglich des Energieverbrauchs optimale Drehzahl (n1) zu ermitteln und
- die in Abhängigkeit des jeweils zu durchmischenden Mediums (1) einzustellende Drehzahl des Rührwerks (3) für einen Rührwerksbetrieb mit geringem Energieverbrauch vorzubestimmen und für einen bezüglich des Energieverbrauchs optimierten Betrieb des Rührwerks einzustellen.

## Claims

1. Method for operating a stirring mechanism (3) for a container (2) which is filled with a medium (1), in which method a value (12) for the rotation speed of the stirring mechanism (3), which value is predetermined as a function of the medium (1) to be thoroughly mixed in each case and is stored in a memory (11), is set by an actuation and evaluation device (9) **characterized in that**, in order to predetermine the rotation speed before the actual stirring process using the actuation and evaluation device (9) in a container (2) which is filled with the medium (1), a plurality of different rotation speed values of the stirring mechanism (3) are set and associated characteristic values (10) for energy consumption of the stirring mechanism (3) are determined and evaluated, **in that** a characteristic curve (20) which represents characteristic values for energy consumption as a function of the rotation speed (n) is determined,
**in that** a rotation speed (n1) which is optimum in respect of energy consumption is determined on the basis of the characteristic curve (20), and
**in that** the rotation speed of the stirring mechanism (3), which is to be set as a function of the medium (1) to be thoroughly mixed in each case, for stirring mechanism operation with a low level of energy consumption is predetermined and is set by the actuation and evaluation device (9) for operation of the stirring mechanism (3) which is optimized in respect of energy consumption.

2. Method according to Claim 1, **characterized in that** a stirrer (4) of the stirring mechanism (3) is driven by a three-phase motor (6) with a frequency converter (8) connected upstream, and **in that** the current consumption (10, I) by the motor (6), which is indicated by the frequency converter (8), is evaluated by the actuation and evaluation device (9) as the characteristic value (10) for energy consumption.

3. Use of a computer program having program code instructions, which can be executed by a computer, for implementing the method according to Claim 1 or 2 on a computer.

4. Use of a storage medium having a computer program, which can be executed by a computer, according to Claim 3.

5. Use of an apparatus for carrying out the method according to Claim 1 or 2 having a stirring mechanism (3) for a container (2) which is filled with a medium (1) and having an actuation and evaluation device (9) for the stirring mechanism (3), which actuation and evaluation device (9) is designed to set a value (12) for the rotation speed of the stirring mechanism (3), which value is predetermined as a function of the medium (1) to be thoroughly mixed in each case and is stored in a memory (11), **characterized**
- **in that** the actuation and evaluation device (9) is further designed, in order to predetermine the rotation speed before the actual stirring process in a container (2) which is filled with the medium (1), to set a plurality of different rotation speed values of the stirring mechanism (3) and to determine and to evaluate associated characteristic values (10) for energy consumption of the stirring mechanism (3),
- to determine a characteristic curve (20) which represents characteristic values for energy consumption as a function of the rotation speed (n),
- to determine a rotation speed (n1), which is optimum in respect of the energy consumption, on the basis of the characteristic curve (20), and
- to predetermine the rotation speed of the stirring mechanism (3), which is to be set as a function of the medium (1) to be thoroughly mixed in each case, for stirring mechanism operation with a low level of energy consumption and to set the said rotation speed for operation of the stirring mechanism which is optimized in respect of energy consumption.

## Revendications

1. Procédé pour faire fonctionner un agitateur (3) pour un récipient (2) empli d'un fluide (1), dans lequel on règle par un dispositif (9) de commande et d'évaluation une valeur de la vitesse de rotation du dispositif (3) d'agitation déterminée à l'avance en fonction du fluide (1) respectif à mélanger et mémorisée dans une mémoire (11),
**caractérisé en ce que**, pour déterminer, avant l'opération d'agitation proprement dite, la vitesse de rotation par le dispositif (9) de commande et d'évaluation, on règle plusieurs valeurs différentes de vitesse de rotation du dispositif (3) d'agitation alors que le récipient (2) est empli du fluide (1) et on détermine et on évalue des valeurs (10) caractéristiques associées de la consommation d'énergie du dispositif (3) d'agitation, **en ce que** l'on détermine une courbe (20) caractéristique qui représente les valeurs caractéristiques de la consommation d'énergie en fonction de la vitesse (n) de rotation, **en ce que**, à l'aide de la courbe (20) caractéristique, on détermine une vitesse (n1) de rotation optimum en ce qui concerne la consommation d'énergie et
**en ce que** l'on détermine à l'avance la vitesse de rotation du dispositif (3) d'agitation à régler en fonction du fluide (1) respectif à mélanger pour un fonctionnement de l'agitateur avec peu de consommation d'énergie et **en ce que** l'on règle par le dispositif (9) de commande et d'évaluation un fonctionnement du dispositif (3) d'agitation optimisé en ce qui concerne la consommation d'énergie.

2. Procédé suivant la revendication 1, **caractérisé en ce que** l'on entraîne un agitateur (4) du dispositif (3) d'agitation par un moteur (6) triphasé ayant un convertisseur (8) de fréquence en série et **en ce qu'**on exploite, par le dispositif (9) de commande et d'exploitation, comme valeur (10) caractéristique de la consommation d'énergie, l'absorption de courant du moteur (6) qu'indique le convertisseur (8) de fréquence.

3. Utilisation d'un programme d'ordinateur, ayant des instructions de code de programme pouvant être exécutées par un ordinateur pour la mise en oeuvre du procédé suivant la revendication 1 ou 2 sur un ordinateur.

4. Utilisation d'un support de mémoire ayant un programme d'ordinateur pouvant être réalisé par un ordinateur suivant la revendication 3.

5. Utilisation d'un dispositif pour effectuer le procédé suivant la revendication 1 ou 2, comprenant un dispositif (3) d'agitation pour un récipient (2) empli d'un fluide (1) et un dispositif (9) de commande et d'évaluation pour le dispositif (3) d'agitation de manière à régler la vitesse de rotation du dispositif (3) d'agitation en fonction de la valeur (12) déterminée à l'avance en fonction du fluide (1) respectif à mélanger et mémorisée dans une mémoire (11),
**caractérisé**
- **en ce que** le dispositif (9) de commande et d'évaluation est constitué en outre pour régler, afin de déterminer à l'avance la vitesse de rotation, avant l'opération d'agitation proprement dite, alors que le récipient (2) est empli du fluide (1), plusieurs valeurs différentes de vitesse de rotation du dispositif (3) d'agitation et pour déterminer et évaluer des valeurs (10) caractéristiques associées de la consommation d'énergie du dispositif (3) d'agitation,
- pour déterminer une courbe (20) caractéristique qui représente les valeurs caractéristiques de la consommation d'énergie en fonction de la vitesse (n) de rotation,
- pour déterminer au moyen de la courbe (20) caractéristique une vitesse (n1) de rotation optimum en ce qui concerne la consommation d'énergie et
- pour déterminer à l'avance la vitesse de rotation du dispositif (3) d'agitation à régler en fonction du fluide (1) respectif à mélanger pour un fonctionnement du dispositif d'agitation avec peu de consommation d'énergie et pour régler un fonctionnement du dispositif d'agitation optimisé en ce qui concerne la consommation d'énergie.
